# EUROPÄISCHE PATENTSCHRIFT

(11) **EP 3 959 042 B1**
(45) Veröffentlichungstag und Bekanntmachung des Hinweises auf die Patenterteilung: **18.11.2026**
(21) Anmeldenummer: 20710437.3
(22) Anmeldetag: 27.02.2020
(51) Int. Cl.: B25J 5/06, B25J 9/00, B25J 11/00, B60M 1/28, B61D 15/08, H02G 1/02, B66F 7/06

(54) **VORRICHTUNG UND VERFAHREN ZUR INSTANDHALTUNG EINER OBERLEITUNGSANLAGE EINES GLEISES**
APPARATUS AND METHOD FOR THE MAINTENANCE OF AN OVERHEAD LINE SYSTEM OF A TRACK
DISPOSITIF ET PROCÉDÉ DE MAINTENANCE D'UNE INSTALLATION DE CATÉNAIRE D'UNE VOIE

(30) Priorität: 23.04.2019 DE 102019205765
(43) Veröffentlichungstag der Anmeldung: 02.03.2022
(73) Patentinhaber: Robel Bahnbaumaschinen GmbH, 83395 Freilassing (DE)
(72) Erfinder: SCHMID, Gregor, 83404 Ainring (DE)
(74) Vertreter: Rau, Schneck & Hübner Patentanwälte Rechtsanwälte PartGmbB
(86) Internationale Anmeldenummer: PCT/EP2020/055114
(87) Internationale Veröffentlichungsnummer: WO 2020/216496

(56) Entgegenhaltungen:
- EP-A1- 0 416 136
- AT-B- 402 184
- CN-A- 108 673 467
- JP-A- H06 144 220
- US-A1- 2015 041 739

## Beschreibung

Die Erfindung betrifft eine Vorrichtung und ein Verfahren zur Instandhaltung einer Oberleitungsanlage eines Gleises.

Im Bahnbetrieb kommt es regelmäßig zu Störungen an Oberleitungsanlagen von Gleisen. Typische Störungsursachen sind beispielsweise defekte Isolatoren oder unerwünschte Störgegenstände, beispielsweise Äste, die sich auf einer Oberleitung befinden. Zur Instandhaltung einer gestörten Oberleitungsanlage wird die Oberleitung spannungsfrei geschaltet, so dass die Störung durch einen Werker manuell beseitigt werden kann. Dies führt einerseits zu einer Beeinträchtigung bzw. Unterbrechung des Bahnbetriebs, da die Oberleitung abschnittsweise komplett spannungsfrei geschaltet werden muss. Andererseits kann es beim Spannungsfreischalten zu Fehlern kommen, wodurch Lebensgefahr für den Werker besteht.

Aus der EP 0 416 136 A1 ist eine auf einem Gleis verfahrbare Maschine zum Verlegen eines Fahrdrahts und/oder eines Tragseils einer Oberleitung bekannt. Die Maschine umfasst einen Schwenkkran, an dem Stütz- und Führungsrollen angeordnet sind. Die Stütz- und Führungsrollen dienen zum Verlegen des Fahrdrahts und des Tragseils. Anhand eines Höhenmessorgans erfolgt durch Fernsteuerung des Schwenkkrans eine exakte Beibehaltung einer Soll-Höhenlage des Fahrdrahts und des Tragseils.

Aus der US 2015/0041739 A1 ist ein Zweiwegefahrzeug bekannt, das Drahthandhabungsarme zum Halten von Drähten einer Oberleitung umfasst.

Aus der JP H06-144220 A ist eine auf einem Gleis verfahrbare Maschine mit Robotern bekannt, die auf einem Dach der Maschine angeordnet sind. Die Roboter dienen zum Austauschen der Oberleitung. Die Roboter werden mittels Sensoren gesteuert.

Aus der AT 402 184 B ist eine Maschine zur Unterhaltung einer Fahrleitung bekannt, die eine Hebebühne und eine darauf angeordnete Verschiebevorrichtung umfasst. Die Verschiebevorrichtung weist einen verschwenkbaren und teleskopierbaren Kranarm auf, an dessen Ende ein Verschiebeorgan angeordnet ist.

Aus der CN 108 673 467 A ist ein Instandhaltungssystem zur Instandhaltung von unter Spannung stehenden elektrischen Leitungen bekannt. Das Instandhaltungssystem umfasst einen Roboter und ein Transportfahrzeug zum Transportieren des Roboters. Der Roboter umfasst ein mobiles Fahrgestell und ist im Betrieb aus dem Transportfahrzeug entladen.

Der Erfindung liegt die Aufgabe zugrunde, eine Vorrichtung zu schaffen, die eine einfache, effiziente und sichere Instandhaltung einer Oberleitungsanlage eines Gleises ermöglicht.

Diese Aufgabe wird durch eine Vorrichtung mit den Merkmalen des Anspruchs 1 gelöst. Erfindungsgemäß dient die Handhabungseinrichtung zum automatisierten Handhaben eines Werkzeugs. Die Handhabungseinrichtung ist teilautomatisiert oder vollautomatisiert betreibbar. Die Handhabungseinrichtung ist an einer Verlagerungseinrichtung angeordnet. Die Verlagerungseinrichtung dient zum Verlagern der Handhabungseinrichtung zwischen einer Transportposition und einer Arbeitsposition. In der Transportposition ist die Oberleitungsanlage außerhalb einer Reichweite der Handhabungseinrichtung, wohingegen in der Arbeitsposition die Oberleitungsanlage innerhalb einer Reichweite der Handhabungseinrichtung ist. Die Verlagerungseinrichtung ist vorzugsweise mittels eines Antriebs betätigbar.

In der Transportposition der Handhabungseinrichtung weist die Vorrichtung einen kompakten Transportzustand auf, so dass die Vorrichtung einfach, effizient und sicher zu einem Einsatzort transportiert werden kann. Hierzu wird die Vorrichtung beispielsweise an einem Fahrzeug, insbesondere einem Schienenfahrzeug, einem Straßenfahrzeug oder einem Geländefahrzeug, oder an einem Schienenwagen oder einem Anhänger bzw. Auflieger angeordnet. Am Einsatzort wird die Handhabungseinrichtung mittels der Verlagerungseinrichtung von der Transportposition in die Arbeitsposition überführt. In der Arbeitsposition ist die instand zu haltende Oberleitungsanlage in Reichweite der Handhabungseinrichtung. Mittels der Handhabungseinrichtung und eines an der Handhabungseinrichtung angeordneten Werkzeugs können in der Arbeitsposition erforderliche Instandhaltungsarbeiten automatisiert durchgeführt werden. Das Werkzeug ist beispielsweise als Greifer ausgebildet. Die Instandhaltungsarbeiten können beispielsweise mittels mindestens eines Sensors und einer Steuereinheit vollautomatisiert durchgeführt werden und/oder mittels einer Fernsteuerung, die von einem Werker in sicherer Entfernung betätigt wird, teilautomatisiert durchgeführt werden. Nach Abschluss der Instandhaltungsarbeiten wird die Handhabungseinrichtung mittels der Verlagerungseinrichtung wieder in die Transportposition überführt und in einem kompakten Transportzustand von dem Einsatzort abtransportiert. Die Vorrichtung ermöglicht somit eine einfache, effiziente und sichere Instandhaltung von Oberleitungsanlagen.

Der mindestens eine Sensor ist insbesondere an der Handhabungseinrichtung und/oder an der Verlagerungseinrichtung angeordnet. Vorzugsweise ist der mindestens eine Sensor als optischer Sensor ausgebildet. Der mindestens eine Sensor ist beispielsweise ein Radarsensor und/oder ein Laserscanner und/oder eine Kamera. Der mindestens eine Sensor dient insbesondere zum Erfassen des zu bearbeitenden Gegenstands und/oder zum Erfassen des zu entfernenden Gegenstands. Der mindestens eine Sensor dient insbesondere zum Erfassen eines Aufnahmeraums für die Verlagerungseinrichtung und/oder für die Handhabungseinrichtung und/oder eines Arbeitsraums der Verlagerungseinrichtung und/oder der Handhabungseinrichtung. Das Erfassen des Aufnahmeraums und/oder des Arbeitsraums ermöglicht ein Erkennen von Personen, die sich in dem Aufnahmeraum und/oder dem Arbeitsraum befinden. Bei einem Erfassen von Personen in dem Aufnahmeraum und/oder dem Arbeitsraum wird die Verlagerungseinrichtung und/oder die Handhabungseinrichtung beispielsweise automatisch gestoppt. Ferner dient der mindestens eine Sensor insbesondere zum Steuern bzw. Positionieren der Handhabungseinrichtung. Vorzugsweise ist der mindestens eine Sensor zum Messen einer Oberleitungsspannung ausgebildet. Hierdurch kann die Vorrichtung überprüfen, ob ein Spannungsfreischalten der Oberleitung erfolgt ist oder nicht. Der mindestens eine Sensor ist insbesondere elektromagnetisch bzw. elektrisch entkoppelt, beispielsweise mittels eines Optokopplers. Der mindestens eine Sensor dient zum automatisierten, beispielsweise vollautomatisierten oder teilautomatisierten Durchführen von Instandhaltungsarbeiten. Zur vollautomatisierten Durchführung von Instandhaltungsarbeiten wird mittels des mindestens einen Sensors der zu bearbeitende bzw. zu entfernende Gegenstand erkannt und die Handhabungseinrichtung mittels des mindestens einen Sensors und einer Steuereinheit vollautomatisch gesteuert, bzw. geregelt, positioniert und überwacht. Beim teilautomatisierten Durchführen von Instandhaltungsarbeiten wird mittels des mindestens einen Sensors und einer Steuereinheit eine Fernsteuerung ausgebildet. Mittels der Fernsteuerung bedient ein Werker die Vorrichtung, insbesondere die Verlagerungseinrichtung und/oder die Handhabungseinrichtung und/oder das Werkzeug, mittels des mindestens einen Sensors und eines Bildschirms. Der Werker befindet sich hierbei in gesicherter Entfernung von der Oberleitungsanlage, beispielsweise in einer Kabine. Die Kabine ist insbesondere elektromagnetisch geschirmt ausgebildet.

Die Handhabungseinrichtung umfasst mindestens fünf Bewegungsachsen. Die Bewegungsachsen sind insbesondere als Schwenkachsen ausgebildet. Vorzugsweise umfasst die Handhabungseinrichtung mindestens eine vertikale Schwenkachse, mindestens eine horizontale Schwenkachse und/oder mindestens eine frei orientierbare Schwenkachse. Mindestens eine der Schwenkachsen ist vorzugsweise um mindestens 360° verschwenkbar, also als Drehachse ausgebildet. Die Handhabungseinrichtung ist als Mehrachs-Roboter, beispielsweise als Industrieroboter ausgebildet. Der Mehrachs-Roboter ist an der Verlagerungseinrichtung befestigt. Der Mehrachs-Roboter ist in der Arbeitsposition insbesondere in einer vertikalen Richtung ausgerichtet, so dass der Mehrachs-Roboter in einfacher Weise die Oberleitungsanlage erreicht. Vorzugsweise weist die Handhabungseinrichtung mindestens fünf und/oder höchstens sechs Bewegungsachsen auf.

Durch das mindestens eine elektrisch isolierende Isolationselement können Instandhaltungsarbeiten bei Anliegen der Oberleitungsspannung durchgeführt werden. Ein Spannungsfreischalten der Oberleitung ist somit nicht erforderlich. Das mindestens eine Isolationselement ist insbesondere Teileines Werkzeugs und/oder Teil der Handhabungseinrichtung und/oder Teil der Verlagerungseinrichtung. Vorzugsweise ist das mindestens eine Isolationselement derart ausgebildet, dass eine elektrische Isolation zwischen einem Werkzeug und der Handhabungseinrichtung und/oder zwischen der Handhabungseinrichtung und der Verlagerungseinrichtung und/oder zwischen der Verlagerungseinrichtung und einem Fahrgestell erfolgt

Die Vorrichtung, insbesondere die Handhabungseinrichtung und/oder die Verlagerungseinrichtung, ist elektrisch isolierend ausgebildet. Hierdurch ist ein Spannungsfreischalten der Oberleitung zur Durchführung von Instandhaltungsarbeiten nicht erforderlich. Der Bahnbetrieb wird dementsprechend nicht beeinträchtigt. Da sich ein Werker zu keinem Zeitpunkt in der Nähe der Oberleitung befindet, und insbesondere zu keinem Zeitpunkt Kontakt zu der Oberleitung oder eines möglicherweise unter Spannung stehenden Gegenstands hat, besteht keinerlei Gefahr.

Die Vorrichtung umfasst einen Behälter. Der Behälter ist insbesondere als Container ausgebildet, beispielsweise als Standard-Container bzw. ISO-Container. In der Transportposition ist die Handhabungseinrichtung und insbesondere auch die Verlagerungseinrichtung innerhalb des Behälters angeordnet, so dass die Vorrichtung als Behälter in Erscheinung tritt und die Abmessungen des Behälters hat. Die Vorrichtung kann somit einfach und sicher zu dem Einsatzort transportiert werden. Während des Transports ist die Handhabungseinrichtung innerhalb des Behälters vor Umwelteinflüssen geschützt. Am Einsatzort wird die Handhabungseinrichtung mittels der Verlagerungseinrichtung von der Transportposition in die Arbeitsposition außerhalb des Behälters überführt. In der Arbeitsposition können dann in der oben beschriebenen Weise die Instandhaltungsarbeiten durchgeführt werden. Die Verlagerungseinrichtung ist in einem Innenraum des Behälters befestigt, vorzugsweise an dem Behälter. In der Transportposition ist die Verlagerungseinrichtung vorzugsweise innerhalb des Behälters angeordnet, wohingegen die Verlagerungseinrichtung in der Arbeitsposition teilweise innerhalb und teilweise außerhalb des Behälters angeordnet ist. Der Behälter weist mindestens eine Behälteröffnung zum Verlagern der Handhabungseinrichtung zwischen der Transportposition und der Arbeitsposition auf. Die mindestens eine Behälteröffnung kann beispielsweise mittels eines zugehörigen Schutzelements je nach Bedarf geöffnet oder geschlossen werden und/oder dauerhaft offen sein. Vorzugsweise weist der Behälter zwei einander gegenüberliegende lange Seiten, zwei einander gegenüberliegende kurze Seiten, eine Unterseite und eine gegenüberliegende Oberseite auf. Vorzugsweise ist die mindestens eine Behälteröffnung an einer kurzen Seite und/oder an einer langen Seite und/oder an der Oberseite des Behälters ausgebildet. Der Behälter ist vorzugsweise mittels Befestigungselementen an einem Fahrgestell reversibel befestigbar.

Eine Vorrichtung nach Anspruch 2 gewährleistet eine einfache, effiziente und sichere Instandhaltung der Oberleitungsanlage. Die mindestens eine Verlagerungsachse ist insbesondere als mindestens eine Linearachse und/oder als mindestens eine Schwenkachse ausgebildet. Die mindestens eine Verlagerungsachse dient zum Verlagern der Handhabungseinrichtung in einer vertikalen Richtung. Die vertikale Richtung verläuft insbesondere parallel zu der Schwerkraftrichtung. Die vertikale Richtung ist insbesondere im Wesentlichen senkrecht zu einem Fahrgestell ausgerichtet, an dem die Vorrichtung befestigt ist. Mittels der mindestens einen Verlagerungsachse ist ein Verlagern der Handhabungseinrichtung zwischen der Transportposition und einer relativ zu der Transportposition höherliegenden Arbeitsposition möglich.

Eine Vorrichtung nach Anspruch 3 gewährleistet eine einfache, effiziente und sichere Instandhaltung der Oberleitungsanlage. Durch die mindestens eine Linearachse kann die Handhabungseinrichtung in einfacher Weise zwischen der Transportposition und der Arbeitsposition verlagert werden. Die mindestens eine Linearachse verläuft vorzugsweise in einer vertikalen Richtung und/oder in einer horizontalen Richtung. Vorzugsweise verläuft die Linearachse im Wesentlichen parallel zu der Schwerkraftrichtung. Die Verlagerungseinrichtung weist insbesondere ein Montageelement auf, an dem die Handhabungseinrichtung befestigt ist. Die Verlagerungseinrichtung ist beispielsweise als Hebebühne ausgebildet. Die Hebebühne umfasst insbesondere eine Plattform und eine Scherenkinematik, die die Linearachse ausbildet. Die Plattform dient zur Montage der Handhabungseinrichtung. Die Verlagerungseinrichtung ist beispielsweise als Schlitteneinheit ausgebildet. Die Schlitteneinheit umfasst eines Schlittens und eine Linearführung. Die Linearführung bildet die Linearachse aus. Der Schlitten dient als Montageelement zur Montage der Handhabungseinrichtung. Der Schlitten ist auf der Linearführung geführt. Die Verlagerungseinrichtung ist insbesondere mittels eines Antriebs betätigbar.

Eine Vorrichtung nach Anspruch 4 gewährleistet eine einfache, effiziente und sichere Instandhaltung der Oberleitungsanlage. Die mindestens eine Schwenkachse verläuft vorzugsweise parallel zu einer horizontalen Richtung. Die Verlagerungseinrichtung weist zur Ausbildung der mindestens einen Schwenkachse insbesondere eine Schwenkbrücke auf, an der die Handhabungseinrichtung befestigt ist. Die Schwenkbrücke dient als Montageelement zur Montage der Handhabungseinrichtung. Die Verlagerungseinrichtung ist insbesondere mittels eines Antriebs betätigbar.

Eine Vorrichtung nach Anspruch 5 gewährleistet eine einfache, effiziente und sichere Instandhaltung der Oberleitungsanlage. Dadurch, dass einzelne Bewegungsachsen oder alle Bewegungsachsen der Handhabungseinrichtung und/oder einzelne Verlagerungsachsen oder alle Verlagerungsachsen der Verlagerungseinrichtung mittels eines jeweiligen elektrischen Antriebs betätigbar sind, ist die Vorrichtung in einfacher Weise steuerbar. Der mindestens eine elektrische Antrieb und/oder mindestens ein Sensor und/oder eine Steuereinheit können elektromagnetisch abgeschirmt und/oder elektromagnetisch entkoppelt ausgebildet sein. Hierdurch können mögliche Störungen und/oder mögliche Schäden aufgrund von elektromagnetischer Strahlung und/oder einem unerwünschten Stromfluss vermieden werden. Wird beispielsweise eine elektrisch betätigbare Handhabungseinrichtung eingesetzt, so ist die Ausbildung der Elektrik und/oder Elektronik so, dass die Oberleitung im eingeschalteten Zustand berührt werden kann, ohne dass die Vorrichtung aufgrund der Oberleitungsspannung Schaden nimmt oder gestört wird. Die Steuereinheit und/oder erforderliche Sensoren sind beispielsweise mittels Optokopplern von der Handhabungseinrichtung und/oder von der Verlagerungseinrichtung getrennt ausgebildet. Elektrische Antriebe bzw. Aktuatoren sind beispielsweise mittels eines Faraday'schen Käfigs und/oder eines Faraday'schen Aufbau der Handhabungseinrichtung und/oder der Verlagerungseinrichtung geschützt. Die Handhabungseinrichtung und/oder die Verlagerungseinrichtung kann unmittelbar mittels mindestens eines elektrischen Antriebs betätigbar sein und/oder mittelbar über mindestens eine elektrisch isolierend ausgebildete Übertragungsmechanik mittels mindestens eines elektrischen Antriebs betätigbar sein. Die elektrisch isolierende Übertragungsmechanik ist beispielsweise eine Seilzugmechanik.

Eine Vorrichtung nach Anspruch 6 gewährleistet eine einfache, effiziente und sichere Instandhaltung der Oberleitungsanlage. Dadurch, dass die Handhabungseinrichtung und/oder die Verlagerungseinrichtung fluidbetreibbar, insbesondere ausschließlich fluidbetreibbar, ausgebildet ist, wird die Vorrichtung durch elektromagnetische Strahlung und/oder einen unerwünschten Stromfluss aufgrund der Oberleitungsspannung nicht gestört und/oder beschädigt. Die Handhabungseinrichtung und/oder die Verlagerungseinrichtung sind beispielsweise pneumatisch und/oder hydraulisch betreibbar bzw. betätigbar. Der mindestens eine fluidbetriebene Antrieb ist beispielsweise als einfach wirkende und/oder doppelt wirkende Kolben-Zylinder-Einheit und/oder als Fluidmotor, insbesondere als Hydraulikmotor und/oder Pneumatikmotor, ausgebildet. Zur Bereitstellung eines Druckfluids umfasst die Vorrichtung eine Druckfluidbereitstellungseinheit. Die Druckfluidbereitstellungseinheit umfasst einen Druckfluiderzeuger und/oder einen Druckfluidspeicher. Der Druckfluiderzeuger ist insbesondere als Pumpe ausgebildet. Der Druckfluiderzeuger ist vorzugsweise elektrisch betreibbar. Vorzugsweise umfasst die Vorrichtung eine pneumatische Druckfluidbereitstellungseinheit und/oder eine hydraulische Druckfluidbereitstellungseinheit. Druckfluidleitungen und/oder Druckfluidanschlüsse sind vorzugsweise elektrisch isolierend ausgebildet. Die Handhabungseinrichtung und/oder die Verlagerungseinrichtung sind somit stromlos betreibbar. Die Druckfluidbereitstellungseinheit, insbesondere ein Druckfluiderzeuger und/oder Druckfluidventile, können elektrisch betätigbar sein.

Eine Vorrichtung nach Anspruch 7 gewährleistet eine einfache, effiziente und sichere Instandhaltung der Oberleitungsanlage. Das Werkzeug ist vorzugsweise als Greifer oder als kombiniertes Trenn-Greif-Werkzeug ausgebildet. Der Greifer ist beispielsweise elektrisch, pneumatisch und/oder hydraulisch betätigbar. Die Werkzeugaufnahme und/oder das Werkzeug sind vorzugsweise elektrisch isolierend ausgebildet. Der Greifer kann eine elektrisch isolierend ausgebildete Übertragungsmechanik umfassen. Mittels des Trenn-Greif-Werkzeuges können zu entfernende Störgegenstände durchtrennt und gegriffen werden.

Eine Vorrichtung nach Anspruch 8 gewährleistet eine einfache, effiziente und sichere Instandhaltung der Oberleitungsanlage. Durch das Werkzeugmagazin stehen der Handhabungseinrichtung geeignete Werkzeuge zum Durchführen verschiedener Instandhaltungsarbeiten zur Verfügung. Die Vorrichtung ermöglicht hierdurch einen automatischen Werkzeugwechsel. Der automatische Werkzeugwechsel kann derart erfolgen, dass die Handhabungseinrichtung ein nicht mehr benötigtes Werkzeug selbsttätig in dem Werkzeugmagazin ablegt und/oder ein benötigtes Werkzeug selbsttätig aus dem Werkzeugmagazin aufnimmt. Bei Bedarf kann zusätzlich zu dem Werkzeugmagazin ein Werkzeugwechsler vorgesehen sein. In diesem Fall überführt der Werkzeugwechsler ein nicht mehr benötigtes Werkzeug von der Handhabungseinrichtung zu dem Werkzeugmagazin und legt dieses in dem Werkzeugmagazin ab. Entsprechend entnimmt der Werkzeugwechsler ein benötigtes Werkzeug aus dem Werkzeugmagazin und überführt dieses zu der Handhabungseinrichtung. Die in dem Werkzeugmagazin aufgenommenen Werkzeuge sind vorzugsweise elektrisch isolierend ausgebildet.

Eine Vorrichtung nach Anspruch 9 gewährleistet eine einfache, effiziente und sichere Instandhaltung der Oberleitungsanlage. Dadurch, dass die Vorrichtung einen Energieerzeuger und/oder einen Energiespeicher umfasst, ist die Vorrichtung weitestgehend autark betreibbar. Die Vorrichtung ist somit unabhängig von einer externen Energieversorgung betreibbar. Der Energieerzeuger und/oder der Energiespeicher dient insbesondere zum Bereitstellen elektrischer Energie. Vorzugsweise umfasst der Energieerzeuger ein Stromaggregat mit einem mittels eines Brennstoffs betreibbaren Antrieb und einen damit angetriebenen Stromgenerator. Der mit Brennstoff betreibbare Antrieb kann beispielsweise ein Diesel-Antrieb eines Schienenfahrzeugs sein. Der Energiespeicher ist insbesondere als Akkumulator ausgebildet. Alternativ oder zusätzlich kann die Vorrichtung einen Anschluss zum Anschließen an eine externe elektrische Energieversorgung aufweisen.

Eine Vorrichtung nach Anspruch 10 gewährleistet eine einfache, effiziente und sichere Instandhaltung der Oberleitungsanlage. Die Steuereinheit ist vorzugsweise elektromagnetisch bzw. elektrisch entkoppelt, beispielsweise mittels mindestens eines Optokopplers. Die Steuereinheit dient zum automatisierten, beispielsweise vollautomatisierten oder teilautomatisierten Durchführen von Instandhaltungsarbeiten. Die Steuereinheit ist insbesondere in Signalverbindung mit mindestens einem Sensor zum Steuern und/oder Überwachen der Handhabungseinrichtung.

Eine Vorrichtung nach Anspruch 11 gewährleistet eine einfache, effiziente und sichere Instandhaltung der Oberleitungsanlage. Das mindestens eine Schutzelement dient zum Schutz der Handhabungseinrichtung und der Verlagerungseinrichtung vor Umwelteinflüssen während des Transports. Das Schutzelement ist relativ zu der Handhabungseinrichtung und/oder zu der Verlagerungseinrichtung verlagerbar. Das mindestens eine Schutzelement ist insbesondere mittels eines Antriebs betätigbar. Vorzugsweise ist das mindestens eine Schutzelement als verlagerbares Dach ausgebildet, das in einem Transportzustand geschlossen und in einem Arbeitszustand geöffnet ist. Das mindestens eine Schutzelement ist beispielsweise als Rollladen und/oder als Sektionalabdeckung ausgebildet.

Der Erfindung liegt ferner die Aufgabe zugrunde, ein mobiles Instandhaltungssystem zu schaffen, das eine einfache, effiziente und sichere Instandhaltung einer Oberleitungsanlage eines Gleises ermöglicht.

Diese Aufgabe wird durch ein mobiles Instandhaltungssystem mit den Merkmalen des Anspruchs 12 gelöst. Dadurch, dass die Vorrichtung an einem Fahrgestell angeordnet ist, ist die Vorrichtung einfach, effizient und sicher zu einem Einsatzort transportierbar und von diesem wieder abtransportierbar. Die Vorrichtung kann fest oder reversibel an dem Fahrgestell befestigt sein. Das mobile Instandhaltungssystem ist beispielsweise als Schienenfahrzeug, als Straßenfahrzeug, als Geländefahrzeug, als Schienenwagen oder als Anhänger ausgebildet. Vorzugsweise weist das mobile Instandhaltungssystem einen eigenen Fahrantrieb auf. Alternativ kann das mobile Instandhaltungssystem keinen eigenen Fahrantrieb aufweisen, sondern als Schienenwagen oder Anhänger ausgebildet sein und mittels eines Fahrzeugs zum Einsatzort transportiert und wieder abtransportiert werden. Ist das mobile Instandhaltungssystem als Schienenfahrzeug oder Schienenwagen ausgebildet, so weist die Vorrichtung einen kompakten Transportzustand derart auf, dass das Lichtraumprofil nicht verletzt wird und die Vorrichtung einfach, effizient und sicher zu dem Einsatzort transportierbar ist.

Der Erfindung liegt ferner die Aufgabe zugrunde, ein Verfahren zu schaffen, das eine einfache, effiziente und sichere Instandhaltung einer Oberleitungsanlage eines Gleises ermöglicht.

Diese Aufgabe wird durch ein Verfahren mit den Merkmalen des Anspruchs 13 gelöst. Die Vorteile des erfindungsgemäßen Verfahrens entsprechen den bereits beschriebenen Vorteilen der erfindungsgemäßen Vorrichtung. Das erfindungsgemäße Verfahren kann insbesondere auch durch das Bereitstellen eines mobilen Instandhaltungssystems gemäß Anspruch 12 weitergebildet werden. Die Instandhaltungsarbeiten an der Oberleitungsanlage können bei anliegender Oberleitungsspannung oder bei abgeschalteter Oberleitungsspannung erfolgen. Ein Spannungsfreischalten der Oberleitungsanlage bzw. der Oberleitung erfolgt vorzugsweise zum Durchführen der Instandhaltungsarbeiten nicht. Die Instandhaltungsarbeiten werden somit vorzugsweise bei Anliegen der Oberleitungsspannung durchgeführt. Nach dem Durchführen der Instandhaltungsarbeiten wird die Handhabungseinrichtung von der Arbeitsposition wieder in die Transportposition überführt und von dem Einsatzort abtransportiert. Vorzugsweise umfasse die Instandhaltungsarbeiten ein Entstören der Oberleitung, insbesondere ein Entfernen von störenden Gegenständen bzw. von Störgegenständen.

Weitere Merkmale, Vorteile und Einzelheiten der Erfindung ergeben sich aus der nachfolgenden Beschreibung mehrerer Ausführungsbeispiele. Es zeigen:
- Fig. 1: eine Seitenansicht eines mobilen Instandhaltungssystems zur Instandhaltung einer Oberleitungsanlage eines Gleises gemäß einem ersten Ausführungsbeispiel in einem Transportzustand,
- Fig. 2: eine Seitenansicht des mobilen Instandhaltungssystems gemäß Fig. 1 in einem Arbeitszustand,
- Fig. 3: eine Seitenansicht eines mobilen Instandhaltungssystems zur Instandhaltung einer Oberleitungsanlage eines Gleises gemäß einem zweiten Ausführungsbeispiel in einem Arbeitszustand, und
- Fig. 4: eine Seitenansicht eines mobilen Instandhaltungssystems zur Instandhaltung einer Oberleitungsanlage eines Gleises gemäß einem dritten Ausführungsbeispiel in einem Arbeitszustand,

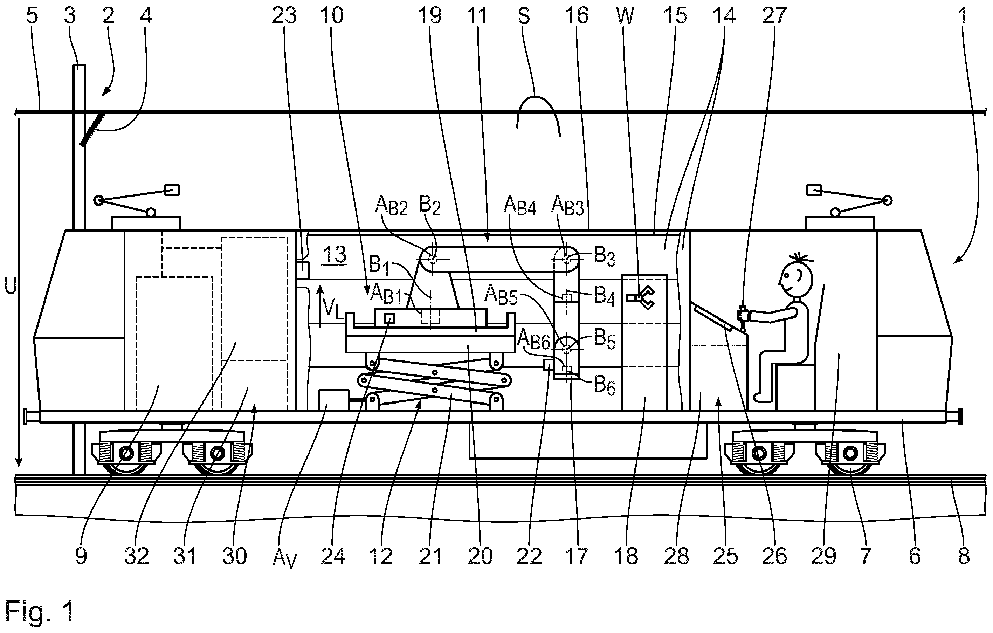

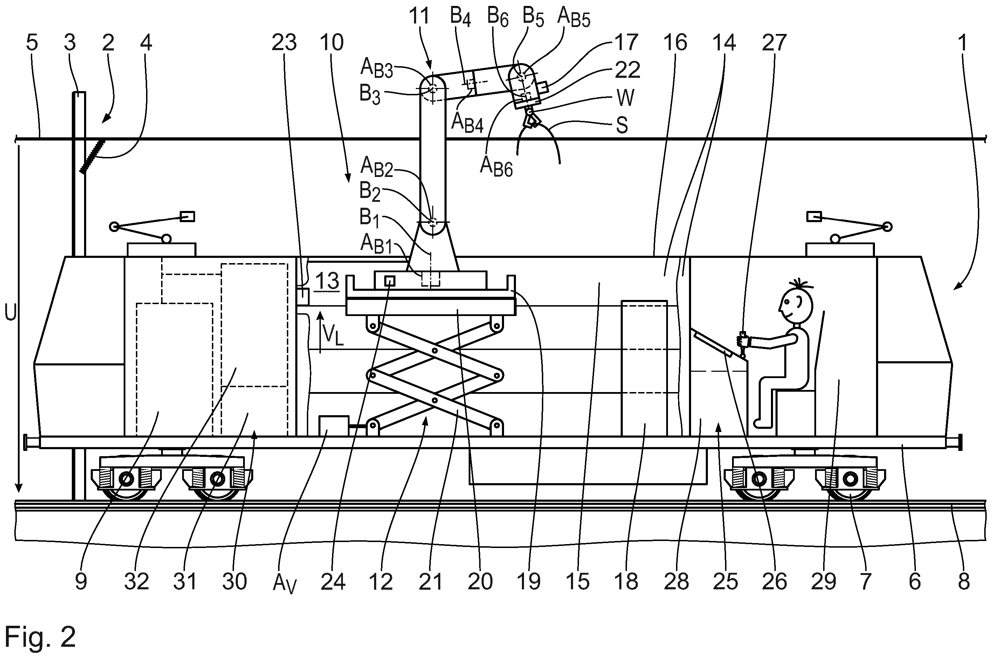

Nachfolgend ist anhand der Fig. 1 und 2 ein erstes Ausführungsbeispiel der Erfindung beschrieben. Ein mobiles Instandhaltungssystem 1 ist als Schienenfahrzeug ausgebildet. Das Instandhaltungssystem 1 dient zur Instandhaltung einer Oberleitungsanlage 2 eines Gleises. Die Oberleitungsanlage 2 umfasst Oberleitungsmasten 3, an denen mittels Isolatoren 4 eine Oberleitung 5 befestigt ist. In einem Betriebszustand liegt an der Oberleitung 5 eine Oberleitungsspannung U an.

Das als Schienenfahrzeug ausgebildete Instandhaltungssystem 1 umfasst ein Fahrgestell 6, an dem mehrere Achsen mit daran befestigten Rädern 7 drehbar gelagert sind. Die Räder 7 sind auf Schienen 8 des Gleises geführt. Das Instandhaltungssystem 1 weist einen elektrischen Fahrantrieb 9 auf, der wahlweise von der Oberleitung 5 oder einer Energieversorgungseinheit mit elektrischer Energie versorgt wird. Die Energieversorgungseinheit ist nachfolgend noch näher beschrieben.

Das Instandhaltungssystem 1 weist eine Vorrichtung 10 zur Instandhaltung der Oberleitungsanlage 2 auf. Die Vorrichtung 10 umfasst eine Handhabungseinrichtung 11 und eine Verlagerungseinrichtung 12 zum Verlagern der Handhabungseinrichtung 11 zwischen einer Transportposition und einer Arbeitsposition. Fig. 1 veranschaulicht das Instandhaltungssystem 1 in einem Transportzustand, in dem sich die Handhabungseinrichtung 11 und die Verlagerungseinrichtung 12 in der Transportposition befinden. In dem Transportzustand sind die Handhabungseinrichtung 11 und die Verlagerungseinrichtung 12 vollständig in einem Aufnahmeraum 13 des Instandhaltungssystems 1 bzw. des Schienenfahrzeugs aufgenommen. Der Aufnahmeraum 13 ist von dem Fahrgestell 6, Seitenwänden 14 und einem Schutzelement 15 begrenzt.

Das Schutzelement 15 ist an einer dem Fahrgestell 6 gegenüberliegenden Oberseite des Aufnahmeraums 13 angeordnet. An der Oberseite des Aufnahmeraums 13 ist eine Instandhaltungsöffnung 16 ausgebildet, die im Transportzustand von dem Schutzelement 15 verschlossen ist und in dem Arbeitszustand von dem Schutzelement 15 freigegeben ist und freiliegt. Hierzu ist das Schutzelement 15 manuell oder mittels eines nicht näher dargestellten Antriebs verlagerbar. Das Schutzelement 15 ist beispielsweise als Sektionalabdeckung bzw. Dach ausgebildet, das entlang einer Seitenwand 14 verlagerbar ist.

Die Handhabungseinrichtung 11 ist als Mehrachs-Roboter ausgebildet. Die Handhabungseinrichtung 11 ist beispielsweise ein Industrieroboter. Die Handhabungseinrichtung 11 weist sechs Bewegungsachsen auf, die im Einzelnen B₁ bis B₆ bezeichnet sind. Die Bewegungsachsen B₁ bis B₅ sind als Schwenkachsen ausgebildet. Die Bewegungsachse B₆ ist als Drehachse ausgebildet. Zur Aufnahme eines Werkzeugs W weist die Handhabungseinrichtung 11 eine Werkzeugaufnahme 17 auf. Der Aufbau der Handhabungseinrichtung 11 bzw. des Mehrachs-Roboters ist bekannt und üblich.

Die Handhabungseinrichtung 11 dient zum Handhaben eines aufgenommenen Werkzeugs W. Zum Betätigen der Bewegungsachsen B₁ bis B₆ weist die Handhabungseinrichtung 11 zugehörige elektrische Antriebe A_{B1} bis A_{B6} auf. Die elektrischen Antriebe A_{B1} bis A_{B6} werden allgemein mit A_{B} bezeichnet.

Zur Bereitstellung von für die Instandhaltung erforderlichen Werkzeugen W umfasst die Vorrichtung 10 ein Werkzeugmagazin 18. Das Werkzeugmagazin 18 ist in dem Aufnahmeraum 13 angeordnet. Bei Bedarf kann ein zusätzlicher Werkzeugwechsler vorgesehen sein.

Die Handhabungseinrichtung 11 ist über ein elektrisch isolierendes Isolationselement 19 mit der Verlagerungseinrichtung 12 verbunden. Mittels des Isolationselements 19 ist die Handhabungseinrichtung 11 gegenüber der Verlagerungseinrichtung 12 und dem Fahrgestell 6 elektrisch isoliert. Ein unerwünschter Stromfluss aufgrund der Oberleitungsspannung U wird mittels des Isolationselements 19 vermieden.

Die Verlagerungseinrichtung 12 ist an dem Fahrgestell 6 befestigt. Das Fahrgestell 6 erstreckt sich in einer x-Richtung und einer senkrecht zu der x-Richtung verlaufenden y-Richtung. Die Verlagerungseinrichtung 11 bildet eine Verlagerungsachse V_{L} aus. Die Verlagerungsachse V_{L} dient zum Verlagern der Handhabungseinrichtung 11 in einer vertikalen z-Richtung. Die z-Richtung verläuft senkrecht zu der x- und der y-Richtung. Die x-, y- und z-Richtung bilden ein kartesisches Koordinatensystem.

Die Verlagerungseinrichtung 12 ist als Hebebühne ausgebildet. Die Verlagerungseinrichtung 12 umfasst eine Plattform 20 und eine Scherenkinematik 21. Die Handhabungseinrichtung 11 ist über das Isolationselement 19 mit der Plattform 20 verbunden. Die Scherenkinematik 21 ist mit der Plattform 20 und dem Fahrgestell 6 verbunden. Die Scherenkinematik 21 ist mittels eines elektrischen Antriebs A_{V} betätigbar. Die Verlagerungsachse V_{L} ist als Linearachse ausgebildet, so dass die Handhabungseinrichtung 11 linear in der vertikalen z-Richtung verlagerbar ist. Die z-Richtung verläuft im Wesentlichen parallel zu der Schwerkraftrichtung. Die Handhabungseinrichtung 11 ist somit zu der Oberleitung 5 hin bzw. von dieser weg verlagerbar.

Zum Durchführen von Instandhaltungsarbeiten weist die Vorrichtung 10 Sensoren 22, 23, 24 und eine Steuereinheit 25 auf. Ein erster Sensor 22 ist als Kamera ausgebildet. Der erste Sensor 22 ist im Bereich der Werkzeugaufnahme 17 an der Handhabungseinrichtung 11 angeordnet. Ein zweiter Sensor 23 ist als Kamera ausgebildet und im Aufnahmeraum 13 an einer der Seitenwände 14 angeordnet. Ein dritter Sensor 24 ist als Spannungsmess-Sensor ausgebildet und an der Handhabungseinrichtung 11 angeordnet. Der dritte Sensor 24 dient zum Messen der Oberleitungsspannung U.

Die Sensoren 22, 23, 24 sind in Signalverbindung mit der Steuereinheit 25. Die Steuereinheit 25 dient zur Ausbildung einer Fernsteuerung. Hierzu weist die Steuereinheit 25 mindestens einen Bildschirm 26 und Bedienelemente 27 sowie einen Rechner 28 auf. Die Steuereinheit 25 ist in einer Kabine 29 angeordnet.

Zur elektrischen Energieversorgung weist die Vorrichtung 10 eine Energiebereitstellungseinheit 30 auf. Die Energiebereitstellungseinheit 30 umfasst einen Energieerzeuger 31 und einen Energiespeicher 32 zur Bereitstellung von elektrischer Energie. Die Energiebereitstellungseinheit 30 ist an dem Fahrgestell 6 angeordnet. Der Energieerzeuger 31 umfasst beispielsweise ein Stromaggregat mit einem mittels eines Brennstoffs betreibbaren Antrieb und einen damit angetriebenen Stromgenerator. Der Energiespeicher 32 ist beispielsweise als Akkumulator ausgebildet. Mittels der Energiebereitstellungseinheit 30 kann auch der elektrische Fahrantrieb 9 mit elektrischer Energie versorgt werden. Die Energiebereitstellungseinheit 30 kann nicht näher dargestellte Gleichrichter, Wechselrichter und/oder Umrichter umfassen.

Nachfolgend ist die Funktionsweise des mobilen Instandhaltungssystems 1 beschrieben:
Fig. 1 zeigt einen Störgegenstand S, der sich auf der Oberleitung 5 befindet. Der Störgegenstand S ist beispielsweise ein Ast. Mittels des mobilen Instandhaltungssystems 1 soll der Störgegenstand S entfernt werden.

Das Instandhaltungssystem 1 befindet sich zunächst in dem in Fig. 1 dargestellten Transportzustand. Die Handhabungseinrichtung 11 und die Verlagerungseinrichtung 12 sind in der in Fig. 1 dargestellten Transportposition in dem Aufnahmeraum 13 angeordnet. Das Schutzelement 15 verschließt die Instandhaltungsöffnung 16, so dass die Handhabungseinrichtung 11 und die Verlagerungseinrichtung 12 vor Umwelteinflüssen geschützt sind.

In dem Transportzustand wird das Instandhaltungssystem 1 mittels des Fahrantriebs 9 zu dem Einsatzort gefahren. Die Versorgung mit elektrischer Energie erfolgt beispielsweise bis zu dem Störgegenstand S über die Oberleitung 5 und am Einsatzort über die Energiebereitstellungseinheit 30.

Am Einsatzort wird das Instandhaltungssystem 1 von dem Transportzustand in den in Fig. 2 dargestellten Arbeitszustand überführt. Hierzu wird zunächst das Schutzelement 15 geöffnet, so dass die Instandhaltungsöffnung 16 offen ist bzw. freiliegt. Anschließend wird die Handhabungseinrichtung 11 und die Verlagerungseinrichtung 12 von einem Werker in der Kabine 29 ferngesteuert. Die Sensoren 22, 23 übertragen aufgenommene Bilder zu dem Bildschirm 26, so dass der Werker mittels der Bedienelemente 27 die Vorrichtung 10 fernsteuern kann.

Die Handhabungseinrichtung 11 nimmt zunächst aus dem Werkzeugmagazin 18 ein geeignetes Werkzeug W auf. Das Werkzeug W ist beispielsweise ein Greifer. Das Werkzeug W ist derart ausgebildet, dass durch eine Bewegung um die Bewegungsachse B₆ ein Öffnen oder Schließen des Greifers erfolgt.

Anschließend wird mittels des elektrischen Antriebs A_{V} die Verlagerungseinrichtung 12 betätigt, so dass die Handhabungseinrichtung 11 entlang der Verlagerungsachse V_{L} linear in der z-Richtung zu der Oberleitung 5 hin verlagert wird. Die Verlagerungseinrichtung 12 wird in der Arbeitsposition arretiert. Die Handhabungseinrichtung 11 befindet sich nun in der gewünschten Arbeitsposition.

Mittels des als Greifer ausgebildeten Werkzeugs W und der Handhabungseinrichtung 11 kann nun der Störgegenstand S von der Oberleitung 5 entfernt werden. Hierbei ist es nicht erforderlich, dass die Oberleitung 5 spannungsfrei geschaltet ist. Die Oberleitungsspannung U kann somit bei den Instandhaltungsarbeiten anliegen. Bei einem erforderlichen Werkzeugwechsel legt die Handhabungseinrichtung 11 das nicht mehr benötigte Werkzeug W in dem Werkzeugmagazin 18 ab und entnimmt aus dem Werkzeugmagazin 18 ein benötigtes Werkzeug W. Der entfernte Störgegenstand S kann anschließend in dem Aufnahmeraum 13 abgelegt und mit abtransportiert werden.

Sind die Instandhaltungsarbeiten abgeschlossen, so werden die Handhabungseinrichtung 11 und die Verlagerungseinrichtung 12 wieder in die Transportposition überführt. Die Verlagerungseinrichtung 12 wird in der Transportposition arretiert. Das Schutzelement 15 wird wieder geschlossen. Die Handhabungseinrichtung 11 legt das nicht mehr benötigte Werkzeug W in dem Werkzeugmagazin 18 ab. Das mobile Instandhaltungssystem 1 kann nun zu einem anderen Einsatzort verfahren werden.

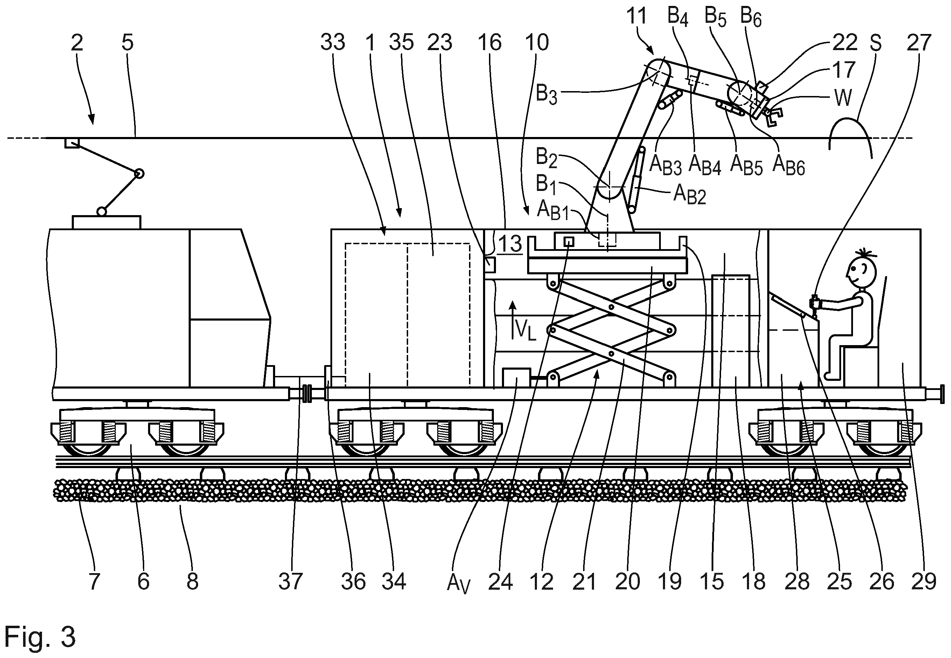

Nachfolgend ist anhand von Fig. 3 ein zweites Ausführungsbeispiel der Erfindung beschrieben. Im Unterschied zu dem ersten Ausführungsbeispiel ist das mobile Instandhaltungssystem 1 als Schienenwagen ausgebildet. Das mobile Instandhaltungssystem 1 wird mittels eines Schienenfahrzeugs zu dem Einsatzort transportiert und wieder von dem Einsatzort abtransportiert. Das mobile Instandhaltungssystem 1 hat somit keinen eigenen Fahrantrieb.

Weiterhin sind die Antriebe A_{V} und A_{B} der Verlagerungseinrichtung 12 und der Handhabungseinrichtung 11 fluidbetrieben. Dies bedeutet, dass die Antriebe A_{V} und A_{B} mittels eines Druckfluids betätigbar sind. Die Antriebe A_{V} und A_{B} sind beispielsweise als Kolben-Zylinder-Einheit und/oder als Fluidmotor ausgebildet. Die Antriebe A_{V} und A_{B} sind beispielsweise pneumatisch mittels Druckluft und/oder hydraulisch mittels einer Druckflüssigkeit, beispielsweise eines Hydrauliköls, betätigbar. Hierzu umfasst die Vorrichtung 10 eine Druckfluidbereitstellungseinheit 33 mit einem Druckfluiderzeuger 34 und einem Druckfluidspeicher 35. Der Drucklufterzeuger 34 ist als elektrisch betreibbare Pumpe ausgebildet. Zur Versorgung mit elektrischer Energie weist das mobile Instandhaltungssystem 1 einen Anschluss 36 auf, der mit einer externen Versorgungsleitung 37 verbunden ist. Die externe Versorgungsleitung 37 ist beispielsweise mit einer elektrischen Energieversorgung des Schienenfahrzeugs verbunden. Der Druckfluidspeicher 35 ist über nicht näher dargestellte Druckfluidleitungen, Druckfluidventile und Druckfluidanschlüsse mit den Antrieben A_{V} und A_{B} verbunden. Die Druckfluidleitungen, Druckfluidventile und die Druckfluidanschlüsse sind elektrisch isolierend ausgebildet. Hinsichtlich des weiteren Aufbaus und der weiteren Funktionsweise wird auf das erste Ausführungsbeispiel verwiesen.

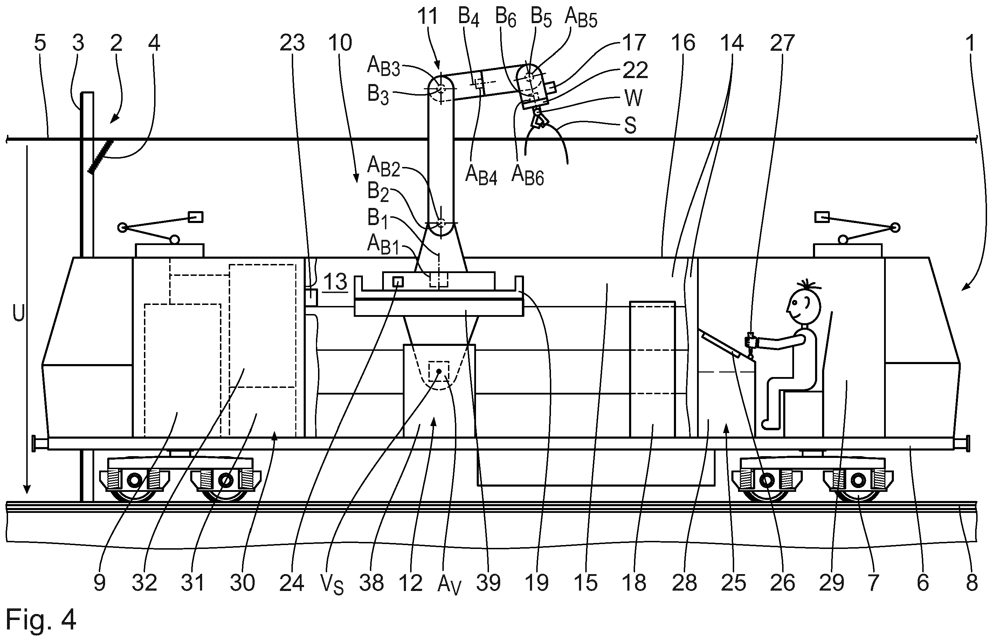

Nachfolgend ist anhand von Fig. 4 ein drittes Ausführungsbeispiel der Erfindung beschrieben. Im Unterschied zu den vorangegangenen Ausführungsbeispielen ist eine Verlagerungsachse V_{S} der Verlagerungseinrichtung 12 als Schwenkachse ausgebildet. Hierzu weist die Verlagerungseinrichtung 12 einen Träger 38 und eine Schwenkbrücke 39 auf. Der Träger 38 ist an dem Fahrgestell 6 befestigt. Der Träger 38 ist gabelförmig ausgebildet. Die Schwenkbrücke 39 ist an beiden Seiten an dem Träger 38 gelagert. Die Verlagerungsachse V_{S} verläuft parallel zu der y-Richtung. Der Antrieb A_{V} ist elektrisch ausgebildet. Hinsichtlich des weiteren Aufbaus und der weiteren Funktionsweise wird auf die vorangegangenen Ausführungsbeispiele verwiesen.

## Patentansprüche

1. Vorrichtung zur Instandhaltung einer Oberleitungsanlage eines Gleises mit
- einer Handhabungseinrichtung (11) zum Handhaben eines Werkzeugs (W), wobei die Handhabungseinrichtung (11) als Mehrachs-Roboter ausgebildet ist und mindestens fünf Bewegungsachsen (B₁ bis B₆) umfasst,
- einer Verlagerungseinrichtung (12) zum Verlagern der Handhabungseinrichtung (11) zwischen einer Transportposition und einer Arbeitsposition,
- mindestens einem Sensor (22, 23, 24) zum Steuern und Überwachen der Handhabungseinrichtung (11), und
- mindestens einem elektrisch isolierenden Isolationselement (19) zur Vermeidung eines unerwünschten Stromflusses aufgrund einer Oberleitungsspannung (U),
**gekennzeichet**
**durch** einen Behälter,
wobei die Verlagerungseinrichtung (12) in einem Innenraum (13) des Behälters befestigt ist,
wobei die Handhabungseinrichtung (11) in der Transportposition innerhalb des Behälters angeordnet ist, und
wobei die Handhabungseinrichtung (11) in der Arbeitsposition außerhalb des Behälters angeordnet ist.

2. Vorrichtung nach Anspruch 1, **dadurch gekennzeichnet,**
**dass** die Verlagerungseinrichtung (12) mindestens eine Verlagerungsachse (V_{L}, V_{S}) zum Verlagern der Handhabungseinrichtung (11) in einer vertikalen Richtung (z) ausbildet.

3. Vorrichtung nach Anspruch 1 oder 2, **dadurch gekennzeichnet,**
**dass** die Verlagerungseinrichtung (12) mindestens eine Linearachse (V_{L}) zum linearen Verlagern der Handhabungseinrichtung (11) ausbildet.

4. Vorrichtung nach mindestens einem der vorangegangenen Ansprüche, **dadurch gekennzeichnet,**
**dass** die Verlagerungseinrichtung (12) mindestens eine Schwenkachse (Vs) zum Verschwenken der Handhabungseinrichtung (11) ausbildet.

5. Vorrichtung nach mindestens einem der vorangegangenen Ansprüche, **dadurch gekennzeichnet,**
**dass** die Handhabungseinrichtung (11) und/oder die Verlagerungseinrichtung (12) mindestens einen elektrischen Antrieb (A_{B}, A_{V}) umfasst.

6. Vorrichtung nach mindestens einem der vorangegangenen Ansprüche, **dadurch gekennzeichnet,**
**dass** die Handhabungseinrichtung (11) und/oder die Verlagerungseinrichtung (12) mindestens einen fluidbetriebenen Antrieb (A_{B}, A_{V}) umfasst.

7. Vorrichtung nach mindestens einem der vorangegangenen Ansprüche, **dadurch gekennzeichnet,**
**dass** die Handhabungseinrichtung (11) eine Werkzeugaufnahme (17) umfasst, in der ein Werkzeug (W) aufgenommen ist.

8. Vorrichtung nach mindestens einem der vorangegangenen Ansprüche, **gekennzeichnet**
**durch** ein Werkzeugmagazin (18) zum Bereitstellen von Werkzeugen (W).

9. Vorrichtung nach mindestens einem der vorangegangenen Ansprüche, **gekennzeichnet**
**durch** einen Energieerzeuger (31) und/oder einen Energiespeicher (32).

10. Vorrichtung nach mindestens einem der vorangegangenen Ansprüche, **gekennzeichnet**
**durch** eine Steuereinheit (25) zum Steuern und/oder Überwachen der Handhabungseinrichtung (11).

11. Vorrichtung nach mindestens einem der vorangegangenen Ansprüche, **gekennzeichnet**
**durch** mindestens ein Schutzelement (15) zum Schutz der Handhabungseinrichtung (11) vor Umwelteinflüssen in der Transportposition.

12. Mobiles Instandhaltungssystem zur Instandhaltung einer Oberleitungsanlage eines Gleises umfassend
- ein Fahrgestell (6),
- mehrere an dem Fahrgestell (6) drehbar gelagerte Räder (7), und
- eine Vorrichtung (10) nach mindestens einem der Ansprüche 1 bis 11, die an dem Fahrgestell (6) angeordnet ist.

13. Verfahren zur Instandhaltung einer Oberleitungsanlage eines Gleises mit den Schritten:
- Bereitstellen einer Vorrichtung (10) nach mindestens einem der Ansprüche 1 bis 11,
- Transportieren der Vorrichtung (10) zu einem Einsatzort, wobei sich die Handhabungseinrichtung (11) in der Transportposition befindet,
- Überführen der Handhabungseinrichtung (11) von der Transportposition in die Arbeitsposition mittels der Verlagerungseinrichtung (12), und
- Durchführen von Instandhaltungsarbeiten mittels der Handhabungseinrichtung (11) und eines Werkzeugs (W).

## Claims

1. A device for the maintenance of an overhead line system of a track with
- a handling device (11) for handling a tool (W), wherein the handling device (11) is designed as a multi-axis robot and comprises at least five movement axes (B₁ to B₆),
- a displacement device (12) for displacing the handling device (11) between a transport position and a working position,
- at least one sensor (22, 23, 24) for controlling and monitoring the handling device (11), and
- at least one electrically insulating insulation element (19) to prevent an undesired current flow due to an overhead line voltage (U),
**characterized**
**by** a tank,
wherein the displacement device (12) is fastened to an interior space (13) of the tank,
wherein the handling device (11) is arranged inside the tank in the transport position, and
wherein the handling device (11) is arranged outside the tank in the working position.

2. A device according to claim 1, **characterized in**
**that** the displacement device (12) forms at least one displacement axis (V_{L}, V_{S}) for displacing the handling device (11) in a vertical direction (z).

3. A device according to claim 1 or 2, **characterized in**
**that** the displacement device (12) forms at least one linear axis (V_{L}) for linearly displacing the handling device (11).

4. A device according to at least one of the preceding claims, **characterized in**
**that** the displacement device (12) forms at least one swivel axis (V_{S}) for swiveling the handling device (11).

5. A device according to at least one of the preceding claims, **characterized in**
**that** the handling device (11) and/or the displacement device (12) comprises at least one electric drive (A_{B}, A_{V}).

6. A device according to at least one of the preceding claims, **characterized in**
**that** the handling device (11) and/or the displacement device (12) comprises at least one fluid-operated drive (A_{B}, A_{V}).

7. A device according to at least one of the preceding claims, **characterized in**
**that** the handling device (11) comprises a tool holder (17) in which a tool (W) is accommodated.

8. A device according to at least one of the preceding claims, **characterized**
**by** a tool magazine (18) for providing tools (W).

9. A device according to at least one of the preceding claims, **characterized**
**by** an energy generator (31) and/or an energy storage (32).

10. A device according to at least one of the preceding claims, **characterized**
**by** a control unit (25) for controlling and/or monitoring the handling device (11).

11. A device according to at least one of the preceding claims, **characterized**
**by** at least one protective element (15) for protecting the handling device (11) from environmental influences in the transport position.

12. A mobile maintenance system for the maintenance of an overhead line system of a track comprising
- a chassis (6),
- a plurality of wheels (7) rotatably mounted on the chassis (6), and
- a device (10) according to at least one of claims 1 to 11, which is arranged on the chassis (6).

13. A method for the maintenance of an overhead line system of a track comprising the steps of:
- providing a device (10) according to at least one of claims 1 to 11,
- transporting the device (10) to a place of use, wherein the handling device (11) is in the transport position,
- transferring the handling device (11) from the transport position to the working position by means of the displacement device (12), and
- performing maintenance work by means of the handling device (11) and a tool (W).

## Revendications

1. Dispositif de maintenance d'une installation à ligne aérienne de contact d'une voie, comprenant :
- un dispositif de manipulation (11) pour manipuler un outil (W), dans lequel le dispositif de manipulation (11) est réalisé sous la forme d'un robot à axes multiples et comprend au moins cinq axes de mouvement (B₁ à B₆),
- un dispositif de déplacement (12) pour déplacer le dispositif de manipulation (11) entre une position de transport et une position de travail,
- au moins un capteur (22, 23, 24) pour commander et surveiller le dispositif de manipulation (11), et
- au moins un élément d'isolation électriquement isolant (19) pour éviter un passage de courant non voulu dû à une tension de ligne aérienne de contact (U),
**caractérisé**
**par** une enceinte,
dans lequel le dispositif de déplacement (12) est fixé dans un espace intérieur (13) de l'enceinte,
dans lequel, dans la position de transport, le dispositif de manipulation (11) est agencé à l'intérieur de l'enceinte, et
dans lequel, dans la position de travail, le dispositif de manipulation (11) est agencé à l'extérieur de l'enceinte.

2. Dispositif selon la revendication 1, **caractérisé en ce**
**que** le dispositif de déplacement (12) définit au moins un axe de déplacement (V_{L}, V_{S}) pour déplacer le dispositif de manipulation (11) dans une direction verticale (z).

3. Dispositif selon la revendication 1 ou 2, **caractérisé en ce**
**que** le dispositif de déplacement (12) définit au moins un axe linéaire (V_{L}) pour déplacer linéairement le dispositif de manipulation (11).

4. Dispositif selon au moins une des revendications précédentes, **caractérisé en ce que** le dispositif de déplacement (12) définit au moins un axe de pivotement (V_{S}) pour faire pivoter le dispositif de manipulation (11).

5. Dispositif selon au moins une des revendications précédentes, **caractérisé en ce que** le dispositif de manipulation (11) et/ou le dispositif de déplacement (12) comprend au moins un entraînement électrique (A_{B}, A_{V}).

6. Dispositif selon au moins une des revendications précédentes, **caractérisé en ce que** le dispositif de manipulation (11) et/ou le dispositif de déplacement (12) comprend au moins un entraînement actionné par un fluide (A_{B}, A_{V}).

7. Dispositif selon au moins une des revendications précédentes, **caractérisé en ce que** le dispositif de manipulation (11) comprend un porte-outil (17) dans lequel un outil (W) est reçu.

8. Dispositif selon au moins une des revendications précédentes, **caractérisé par** un magasin d'outils (18) pour fournir des outils (W).

9. Dispositif selon au moins une des revendications précédentes, **caractérisé par** un générateur d'énergie (31) et/ou un accumulateur d'énergie (32).

10. Dispositif selon au moins une des revendications précédentes, **caractérisé par** une unité de commande (25) pour commander et/ou surveiller le dispositif de manipulation (11).

11. Dispositif selon au moins une des revendications précédentes, **caractérisé par** au moins un élément de protection (15) pour protéger le dispositif de manipulation (11) contre des influences de l'environnement dans la position de transport.

12. Système de maintenance mobile pour la maintenance d'une installation à ligne aérienne de contact d'une voie, comprenant :
- un bogie (6),
- plusieurs roues (7) montées sur le bogie (6) de façon à pouvoir tourner, et
- un dispositif (10) selon au moins une des revendications 1 à 11, qui est agencé sur le bogie (6).

13. Procédé de maintenance d'une installation à ligne aérienne de contact d'une voie, comprenant les étapes consistant à :
- fournir un dispositif (10) selon au moins une des revendications 1 à 11,
- transporter le dispositif (10) jusqu'à un lieu d'utilisation, dans lequel le dispositif de manipulation (11) est dans la position de transport,
- transférer le dispositif de manipulation (11) de la position de transport à la position de travail au moyen du dispositif de déplacement (12), et
- réaliser des travaux de maintenance au moyen du dispositif de manipulation (11) et d'un outil (W).
